# FASCICULE DE BREVET EUROPEEN

(11) **EP 0 583 199 B1**
(45) Date de publication et mention de la délivrance du brevet: **06.03.1996**
(21) Numéro de dépôt: 93402034.8
(22) Date de dépôt: 10.08.1993
(51) Int. Cl.: B62D 1/26, B61B 13/00

(54) **Dispositif orienteur pour bogie de véhicule équipé de roues à pneumatiques**
Einstellvorrichtung für ein Reifenfahrzeug-Drehgestell
Guiding device for a bogie of a road vehicle with tyre wheels

(30) Priorité: 11.08.1992 FR 9209913
(43) Date de publication de la demande: 16.02.1994
(73) Titulaire: TECHLAM, F-68701 Cernay (FR)
(72) Inventeur: Senes, René, F-68800 Roderen (FR); Thuet, Sylvain, F-68800 Roderen (FR)
(74) Mandataire: Joly, Jean-Jacques

(56) Documents cités:
- EP-A- 0 062 370
- FR-A- 996 243
- FR-A- 2 307 693
- US-A- 2 718 194

## Description

La présente invention se rapporte à un dispositif orienteur pour bogie de véhicule équipé de roues à pneumatiques qui prennent appui sur une paire de pistes de roulement formant la voie le long de laquelle circule le véhicule, ce dispositif comprenant un galet directeur dont le plan moyen est maintenu parallèle ou sensiblement parallèle à celui des roues du bogie et qui peut tourner autour de son axe propre en s'engageant dans une ornière de guidage implantée entre les pistes précitées de la voie avant chaque bifurcation, ledit galet étant porté par le châssis du bogie par l'intermédiaire d'éléments élastiques de liaison qui confèrent au galet, par rapport au bogie, un degré de liberté en rotation, de faible amplitude, autour d'un axe passant par son centre et perpendiculaire au plan de la voie, et un degré de liberté en translation, également de faible amplitude, suivant la direction de son axe propre, mais empêchent le galet de se déplacer par rapport au bogie suivant la direction longitudinale de la voie et suivant la direction perpendiculaire au plan de la voie.

Certains véhicules modernes de transport urbain sont équipés de roues à pneumatiques et se déplacent sur une voie comprenant uniquement deux pistes de roulement et deux barres latérales de guidage. La fonction aiguillage est assurée par le galet précité, qui s'engage dans l'ornière de guidage prévue aux abords de chaque bifurcation. Le galet, guidé par l'ornière, oriente alors le bogie vers la branche désirée de la bifurcation.

Afin que l'entrée du galet dans l'ornière, puis son guidage s'effectuent dans de bonnes conditions, il est nécessaire d'interposer entre le galet et le bogie un dispositif de liaison fournissant au galet un degré de liberté en rotation autour d'un axe perpendiculaire au plan de la voie et un degré de liberté en translation latérale par rapport au bogie.

Actuellement, ce dispositif de liaison est réalisé à l'aide d'éléments mécaniques traditionnels tels que roulements à billes ou à rouleaux, ressorts, rondelles Belleville, etc. Un dispositif ainsi constitué nécessite un graissage périodique et se trouve néanmoins soumis à une usure rapide. De plus, il est lourd et générateur de bruit lors du passage de l'aiguillage.

La présente invention concerne un dispositif orienteur à galet d'aiguillage dont les degrés de liberté sont obtenus grâce à des éléments de liaison comprenant des blocs lamifiés formés d'empilements de couches minces alternativement en matériau rigide et en matériau souple, adhérisées entre elles.

L'utilisation de tels blocs lamifiés, déformables en cisaillement dans une direction quelconque parallèle aux feuillets constitués par les couches alternées précitées, mais à peu près incompressibles en direction perpendiculaire auxdits feuillets, fournit une solution simple et élégante au problème du guidage par galet directeur des bogies de véhicules sur pneumatiques dans les bifurcations que comporte la piste que les véhicules sont astreints à suivre.

Plus précisément, il convient que les éléments de liaison procurant les deux degrés de liberté précités comprennent deux ensembles lamifiés semblables formés chacun d'un bloc lamifié ou d'un groupe de blocs lamifiés disposé suivant une couronne parallèle au plan de la voie et centrée sur l'axe passant par le centre du galet et perpendiculaire au plan de la voie, dont les couches constitutives sont planes et parallèles au plan de la voie, ces deux ensembles étant montés de part et d'autre d'une première platine d'appui s'étendant parallèlement au plan de la voie, en interposition entre deux secondes platines d'appui parallèles à la première platine et solidarisées l'une avec l'autre, la paire de secondes platines étant fixe par rapport soit à l'axe du galet, soit au châssis du bogie, tandis que la première platine est fixe par rapport soit à ce dernier, soit à l'axe du galet, respectivement.

La configuration de ces ensembles lamifiés leur donne la possibilité de se déformer en cisaillement dans un plan parallèle au plan de la voie (normalement horizontal), ce qui permet au galet de se déplacer par rapport au bogie soit en torsion autour d'un axe vertical, soit en translation dans un plan horizontal. Par contre, toute possibilité de translation verticale ou de rotation autour d'un axe parallèle à la direction longitudinale de la voie se trouve empêchée du fait de la forte rigidité des ensembles lamifiés dans la direction verticale.

De préférence, les deux ensembles lamifiés sont placés sous précontrainte entre les deux secondes platines, ce qui augmente leur rigidité verticale et évite l'apparition éventuelle de contraintes de traction.

Avantageusement, les deux ensembles lamifiés sont identiques et disposés de la même façon autour du centre du galet. Il convient alors que chaque ensemble lamifié se compose de plusieurs blocs lamifiés en forme de portion de couronne circulaire et que l'une au moins de la première platine et des secondes platines soit subdivisée en portions distinctes dont chacune est affectée à l'un respectif desdits blocs lamifiés. Dans une forme de réalisation particulièrement simple, chaque ensemble se compose d'une paire de blocs lamifiés identiques dont l'un est le symétrique de l'autre par rapport au plan moyen du galet, les blocs lamifiés de chaque ensemble étant disposés, de part et d'autre de la première platine, en coïncidence avec ceux de l'autre ensemble.

On observera que le système de liaison flexible décrit jusqu'ici laisse au galet directeur un degré de liberté en translation suivant la direction longitudinale de la voie. Pour supprimer ce degré de liberté, qui n'est pas favorable à un bon fonctionnement, il est prévu que les éléments de liaison comprennent en outre une paire de blocs lamifiés sensiblement alignés avec le centre du galet selon la direction longitudinale de la voie, en forme de portion de couronne circulaire de faible étendue angulaire de part et d'autre du plan moyen du galet et composés de couches cylindriques dont l'axe est perpendiculaire au plan de la voie et passe par le centre du galet, chacun de ces blocs lamifiés étant interposé entre deux pièces d'appui, l'une fixe par rapport à l'axe du galet et l'autre solidaire du châssis du bogie. Ces deux blocs lamifiés, disposés de préférence symétriquement par rapport au centre du galet, et avantageusement placés sous précontrainte entre leurs pièces d'appui suivant la direction longitudinale de la voie, permettent au galet des mouvements de torsion autour d'un axe vertical et de déplacement latéral, grâce à leur capacité de déformation en cisaillement. Par contre, leur forte rigidité en compression permet de bloquer tout mouvement de translation en direction longitudinale de la part du galet.

Une liaison de qualité optimale pour les blocs lamifiés que comporte le dispositif selon l'invention est obtenue par adhérisation aux faces des platines ou pièces d'appui entre lesquelles ils sont interposés. En outre, les dimensions et les caractéristiques de ces blocs lamifiés sont choisies de façon à obtenir, pour la suspension du galet directeur dans le bogie du véhicule, les souplesses désirées aussi bien en torsion autour de l'axe vertical qu'en translation latérale.

Les principaux avantages qu'offre un dispositif selon l'invention sont les suivants :
- absence d'usure, d'où grande durée de vie et entretien réduit;
- masse diminuée et faible encombrement;
- sécurité de fonctionnement du fait de la disposition des blocs lamifiés, spécialement lorsque ceux-ci sont montés sous précontrainte;
- réduction du bruit au passage des aiguillages.

D'autres particularités et avantages de l'invention ressortiront de la description qui va suivre, en regard des dessins annexés, d'un exemple de réalisation non limitatif.

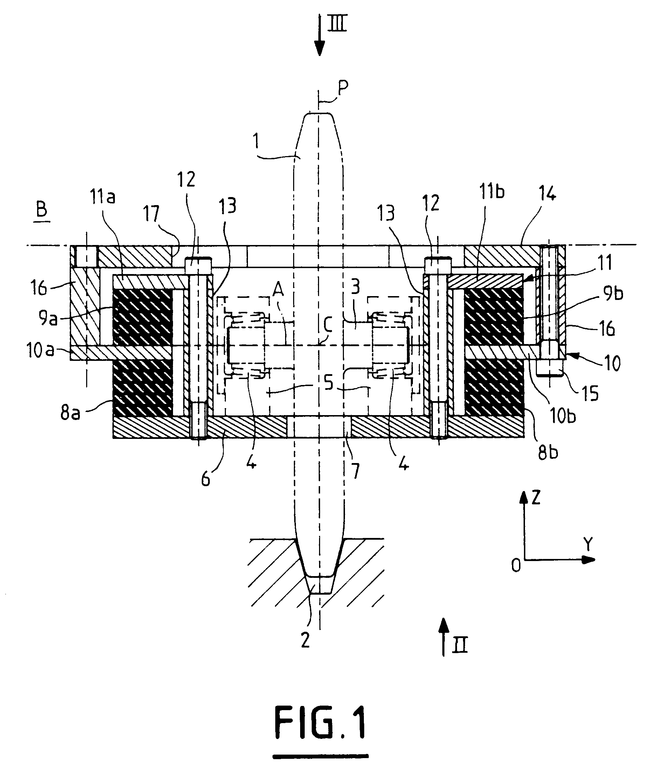

La figure 1 représente un dispositif selon l'invention en coupe par un plan vertical suivant la ligne I-I de la figure 3.

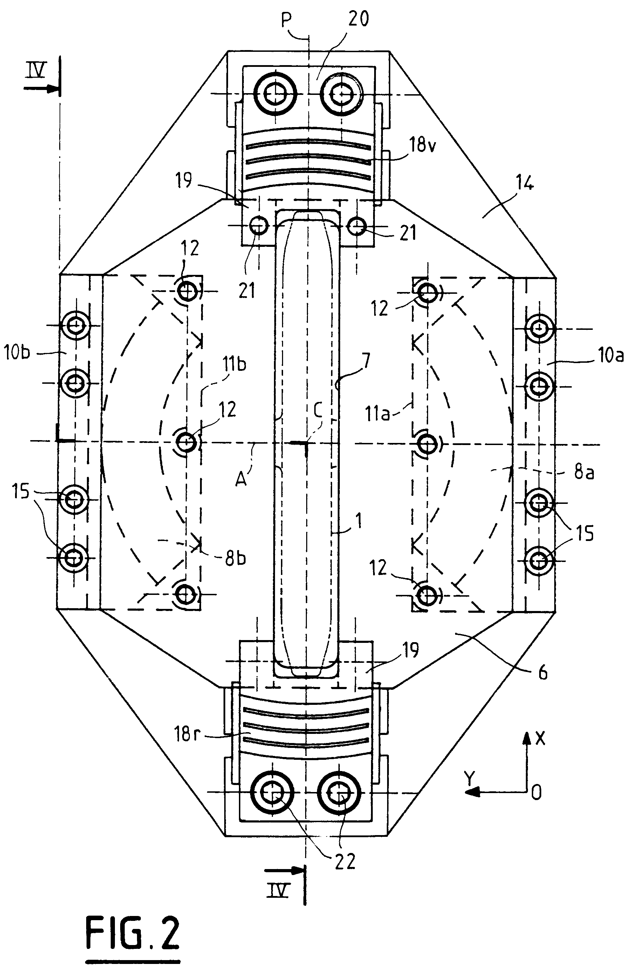

La figure 2 représente en plan le dispositif vu par-dessous suivant la flèche II de la figure 1.

La figure 3 représente en plan le dispositif vu par-dessus suivant la flèche III de la figure 1.

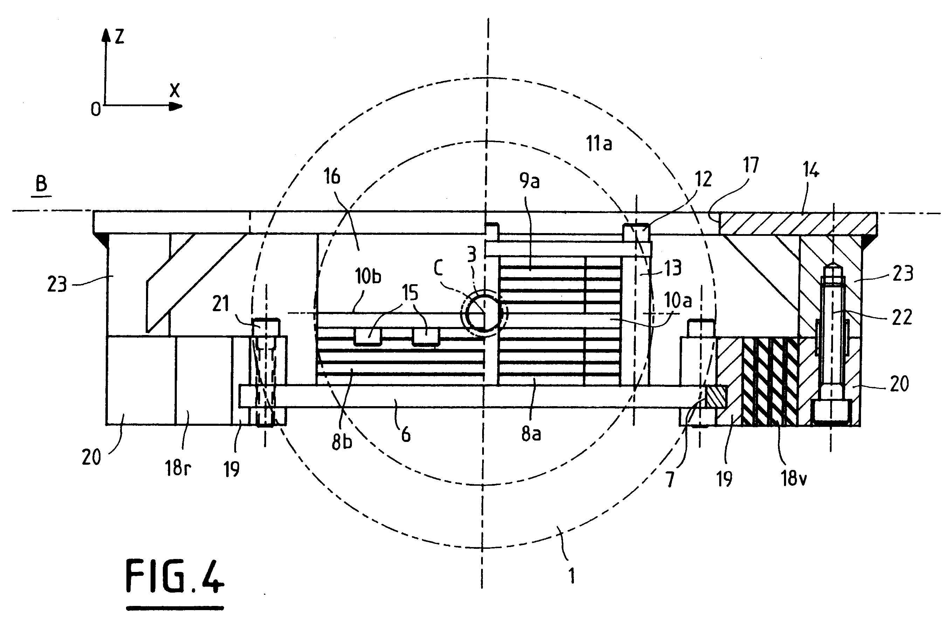

La figure 4 représente le dispositif en coupe partielle suivant la ligne IV-IV de la figure 2.

On voit sur les figures un galet directeur 1 en forme de disque circulaire dont est muni chacun des bogies d'un véhicule de transport urbain équipé de roues à pneumatiques et se déplaçant sur une voie comprenant deux pistes de roulement et deux barres latérales de guidage. Le galet 1, dont le plan moyen P sera supposé vertical, la voie étant elle-même supposée horizontale, s'engage dans une ornière 2 implantée dans l'axe de la voie avant chaque bifurcation. Le galet 1, amené à suivre l'une ou l'autre des directions de la bifurcation grâce à un aiguillage incorporé à l'ornière 2, fait s'orienter en conséquence autour d'un axe vertical le bogie qu'il équipe de manière que les roues de celui-ci poursuivent leur course dans la direction choisie.

Le galet 1 est calé au centre d'un arbre rotatif 3 dont l'axe A est horizontal et parallèle à une direction OY perpendiculaire à la direction longitudinale OX de la voie. Cet arbre 3 est porté, par l'intermédiaire d'une paire de roulements à rouleaux 4, par une paire de supports 5 fixés à la face supérieure d'une platine horizontale 6, dans laquelle a été ménagée en direction longitudinale une fente oblongue 7 permettant le passage vers le bas du galet 1.

Sur la platine 6 sont disposées, symétriquement de part et d'autre du plan P du galet 1, deux paires de blocs lamifiés superposés 8a, 9a et 8b, 9b. Chacun de ces blocs, tous identiques, est composé de couches horizontales alternativement de matière rigide (feuilles métalliques) et de matière souple (feuilles de caoutchouc ou d'élastomère), et présente en plan la forme d'une portion de couronne circulaire dont l'axe coïncide avec la verticale passant par le centre C du galet 1. Entre les blocs de chaque paire 8a, 9a; 8b, 9b est interposée une platine horizontale 10, décomposée en deux éléments distincts 10a, 10b respectivement associés aux deux paires de blocs lamifiés, l'ensemble étant pris en sandwich entre la platine 6 et une platine parallèle 11, décomposée de même en deux éléments distincts 11a, 11b, lesquels sont fixés à la platine 6 par des vis 12 coopérant avec des entretoises 13 qui fixent l'écartement mutuel des platines 6 et 11. Quant à la platine intermédiaire 10, son plan passe par le centre C du galet 1 ou en est très voisin.

Chacun des éléments 10a, 10b composant la platine 10 est fixé à une platine 14 également horizontale, située au-dessus de la platine 10, au moyen de vis 15 avec interposition d'entretoises 16 déterminant l'écartement des platines 10 et 14. La platine 14 est dotée d'une large ouverture centrale 17 permettant notamment le passage vers le haut du galet 1. Elle est par ailleurs fixée au châssis B du bogie.

De part et d'autre de la platine 6, suivant la direction longitudinale OX, sont disposés deux autres blocs lamifiés 18v, 18r dont la structure est semblable à celle des blocs lamifiés 8a, 8b, 9a, 9b, et ils ont comme ceux-ci la forme de portions de couronne circulaire. Toutefois, les couches des blocs 18v, 18r sont cylindriques, admettant un axe commun vertical passant par le centre C du galet. Chacun des blocs 18v, 18r est interposé entre deux pièces d'appui 19, 20, la pièce 19 étant fixée à l'une des extrémités longitudinales de la platine 6 au moyen de vis 21 et la pièce 20 à l'extrémité longitudinale correspondante de la platine 14, au moyen de vis 22, via une pièce intermédiaire 23 solidaire de la platine 14.

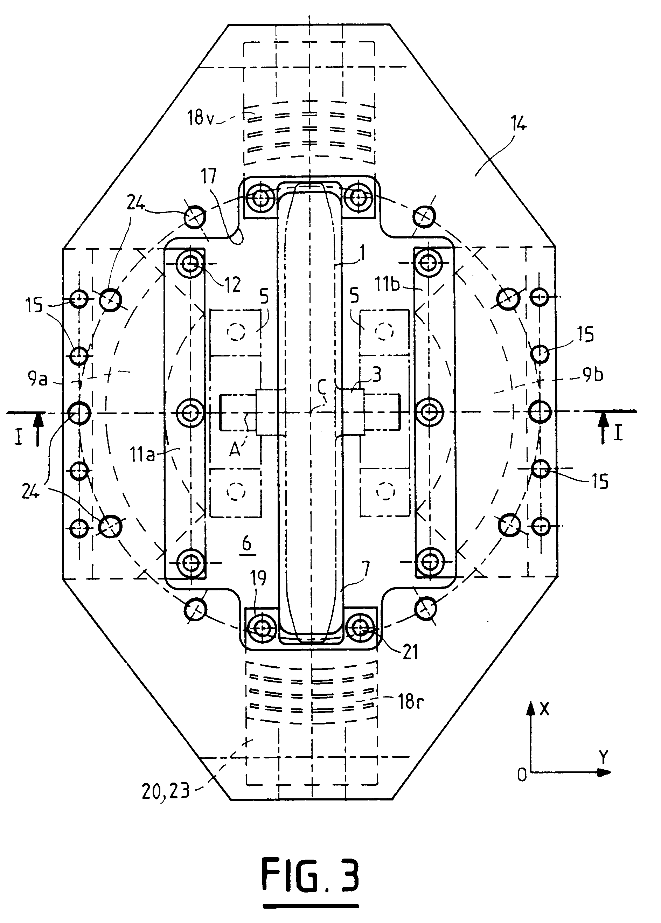

Comme on peut le voir sur les figures, la structure du dispositif décrit est symétrique par rapport au plan P du galet 1 ainsi que par rapport au plan perpendiculaire à ce plan et passant par le centre C du galet. Ce dispositif est fixé sous le châssis B du bogie correspondant à l'aide de vis introduites dans des trous 24 percés dans la platine supérieure 14 régulièrement répartis suivant une couronne centrée sur l'axe vertical passant par le centre C du galet (figure 3).

Les blocs lamifiés qui assurent la suspension du galet 1 par rapport à la platine 14 et, par suite, au bogie autorisent au galet, tandis qu'ils se déforment en cisaillement, des mouvements de rotation autour de l'axe vertical passant par son centre C ainsi que des mouvements de translation suivant la direction OY transversale par rapport à la voie. Les blocs lamifiés 18v, 18r ne s'opposent pas à ces mouvements de translation, du fait de la faible courbure de leurs couches constitutives, due à leur étendue angulaire réduite autour dudit axe vertical et à leur éloignement relativement grand de celui-ci. Par contre, ils empêchent tout déplacement du galet suivant la direction longitudinale OX de la voie, étant incompressibles dans cette direction. De façon semblable, les blocs lamifiés 8a, 8b, 9a, 9b, dont les couches s'étendent horizontalement, s'opposent à tout déplacement vertical du galet 1 par rapport au bogie.

De même qu'il est fait pour les paires de blocs 8a, 9a; 8b, 9b, on peut prévoir de placer sous précontrainte la paire de blocs 18v, 18r en resserrant l'une vers l'autre les pièces d'appui extrêmes 20 situées de part et d'autre de ces blocs et de la platine 6 interposée entre ceux-ci.

## Revendications

1. Dispositif orienteur pour bogie de véhicule équipé de roues à pneumatiques qui prennent appui sur une paire de pistes de roulement formant la voie le long de laquelle circule le véhicule, ce dispositif comprenant un galet directeur dont le plan moyen est maintenu parallèle ou sensiblement parallèle à celui des roues du bogie et qui peut tourner autour de son axe propre en s'engageant dans une ornière de guidage implantée entre les pistes précitées de la voie avant chaque bifurcation, ledit galet étant porté par le châssis du bogie par l'intermédiaire d'éléments élastiques de liaison qui confèrent au galet, par rapport au bogie, un degré de liberté en rotation, de faible amplitude, autour d'un axe passant par son centre et perpendiculaire au plan de la voie, et un degré de liberté en translation, également de faible amplitude, suivant la direction de son axe propre, mais empêchent le galet de se déplacer par rapport au bogie suivant la direction longitudinale de la voie et suivant la direction perpendiculaire au plan de la voie,
caractérisé par le fait que les éléments de liaison comprennent des blocs lamifiés (8a, 9a, 8b, 9b, 18v, 18r) formés d'empilements de couches minces alternativement en matériau rigide et en matériau souple, adhérisées entre elles.

2. Dispositif selon la revendication 1, caractérisé par le fait que les éléments de liaison procurant les deux degrés de liberté précités comprennent deux ensembles lamifiés semblables formés chacun d'un bloc lamifié ou d'un groupe de blocs lamifiés (8a, 8b; 9a, 9b) disposé suivant une couronne centrée sur l'axe passant par le centre (C) du galet (1) et perpendiculaire au plan de la voie, dont les couches constitutives sont planes et parallèles au plan de la voie, ces deux ensembles étant montés de part et d'autre d'une première platine d'appui (10) s'étendant parallèlement au plan de la voie, en interposition entre deux secondes platines d'appui (6, 11) parallèles à la première platine (10) et solidarisées l'une avec l'autre, la paire de secondes platines (6, 11) étant fixe par rapport soit à l'axe (A) du galet (1), soit au châssis (B) du bogie, tandis que la première platine est fixe par rapport soit à ce dernier, soit à l'axe du galet, respectivement.

3. Dispositif selon la revendication 2, caractérisé par le fait que les deux ensembles lamifiés sont placés sous précontrainte entre les deux secondes platines (6, 11).

4. Dispositif selon la revendication 2 ou 3, caractérisé par le fait que les deux ensembles lamifiés sont identiques et disposés de la même façon autour du centre (C) du galet (1).

5. Dispositif selon la revendication 4, caractérisé par le fait que chaque ensemble lamifié se compose de plusieurs blocs lamifiés (8a, 8b; 9a, 9b) en forme de portion de couronne circulaire et que l'une au moins de la première platine (10) et des secondes platines (6, 11) est subdivisée en portions distinctes (10a, 10b; 11a, 11b) dont chacune est affectée à l'un respectif desdits blocs lamifiés.

6. Dispositif selon la revendication 5, caractérisé par le fait que chaque ensemble se compose d'une paire de blocs lamifiés identiques (8a, 8b; 9a, 9b) dont l'un est le symétrique de l'autre par rapport au plan moyen (P) du galet (1), les blocs lamifiés de chaque ensemble étant disposés, de part et d'autre de la première platine (10), en coïncidence avec ceux de l'autre ensemble.

7. Dispositif selon l'une quelconque des revendications 1 à 6, caractérisé par le fait que les éléments de liaison comprennent en outre une paire de blocs lamifiés (18r, 18v) sensiblement alignés avec le centre (C) du galet (1) selon la direction longitudinale (OX) de la voie, en forme de portion de couronne circulaire de faible étendue angulaire de part et d'autre du plan moyen (P) du galet (1) et composés de couches cylindriques dont l'axe est perpendiculaire au plan de la voie et passe par le centre (C) du galet, chacun de ces blocs lamifiés étant interposé entre deux pièces d'appui (19, 20), l'une fixe par rapport à l'axe du galet et l'autre solidaire du châssis (B) du bogie.

8. Dispositif selon la revendication 7, caractérisé par le fait que les deux blocs lamifiés (18v, 18r) formant ladite paire sont disposés symétriquement par rapport au centre (C) du galet (1).

9. Dispositif selon la revendication 7 ou 8, caractérisé par le fait que les deux blocs lamifiés (18v, 18r) formant ladite paire sont placés sous précontrainte entre leurs pièces d'appui suivant la direction longitudinale (OX) de la voie.

10. Dispositif selon l'une quelconque des revendications 1 à 9, caractérisé par le fait que chacun des blocs lamifiés qu'il comporte est lié par adhérisation aux faces des platines ou pièces d'appui entre lesquelles il est interposé.

## Claims

1. Steering device for a vehicle bogey fitted with wheels having pneumatic tires that run on a pair of runways forming a track along which the vehicle travels, said device comprising a steering caster whose mean plane is kept parallel or substantially parallel to that of the wheels of the bogey and which is capable of rotating about its own axis, engaging in a guide groove formed between said runways of the track ahead of each branch point, said caster being carried by the frame of the bogey via resilient link elements that confer to the caster and relative to the bogey a small-amplitude degree of freedom in rotation about an axis passing through the center of the caster and perpendicular to the plane of the track, and a similarly small-amplitude degree of freedom in translation along the direction of the caster's own axis, but that prevent the caster from moving relative to the bogey in the longitudinal direction of the track or in the direction perpendicular to the plane of the track,
characterized by the fact that the link elements comprise laminated blocks (8a, 9a, 8b, 9b, 18v, 18r) formed by stacks of alternating thin layers of rigid material and of flexible material that are bonded together.

2. Device according to claim 1, characterized by the fact that the link elements providing said two degrees of freedom comprise two similar laminated assemblies each constituted by a laminated block or a group of laminated blocks (8a, 8b, 9a, 9b) disposed around a circle centred on the axis passing through the center (C) of the caster (1) and perpendicular to the plane of the track, the component layers of the blocks being plane and parallel to the plane of the track, these two assemblies being mounted on either side of a first thrust plate (10) extending parallel to the plane of the track between two second thrust plates (6, 11) parallel to the first plate (10) and secured to each other, the pair of second plates (6, 11) being fixed relative to either the axis (A) of the caster (1) or to the frame (B) of the bogey, while the first plate is fixed relative either to the latter, or to the axis of the caster, respectively.

3. Device according to claim 2, characterized by the fact that laminated assemblies are placed with prestress between the two second plates (6, 11).

4. Device according to claim 2 or 3, characterized by the fact that laminated assemblies are identical and are disposed in the same way about the center (C) of the caster (1).

5. Device according to claim 4, characterized by the fact that each laminated assembly is made up of a plurality of laminated blocks (8a, 8b, 9a, 9b) each in the form of a portion of a circular ring, and that at least one of the first (10) and second (6, 11) plates is subdivided into distinct portions (10a, 10b, 11a, 11b), each of which is associated with a respective one of said laminated blocks.

6. Device according to claim 5, characterized by the fact that each assembly is made up of a pair of identical laminated blocks (8a, 8b, 9a, 9b) one of which is symmetrical to the other relative to the mean plane (P) of the caster (1), the laminated blocks of each assembly being disposed on either side of the first plate (10) in coincidence with those of the other assembly.

7. Device according to any one of claims 1 to 6, characterized by the fact that the link elements further include a pair of laminated blocks (18r, 18v) substantially in alignment with the center (C) of the caster (1) in the longitudinal direction (OX) of the track, the blocks forming a portion of a circular ring of small angular extent on either side of the midplane (P) of the caster (1) and being made up of cylindrical layers of which the axis is perpendicular to the plane of the track and passes through the center (C) of the caster, each of these laminated blocks being interposed between two thrust pieces (19, 20), one fixed relative to the axis and the other secured to the frame (B) of the bogey.

8. Device according to claim 7, characterized by the fact that the two laminated blocks (18v, 18r) forming said pair are disposed symmetrically about the center (C) of the caster (1).

9. Device according to claim 7 or 8, characterized by the fact that the two laminated blocks (18v, 18r) forming said pair are placed under prestress between their thrust pieces in the longitudinal direction (OX) of the track.

10. Device according to any one of claims 1 to 9, characterized by the fact that each of the laminated blocks that it includes is bonded to the faces of the plates or thrust pieces between which it is interposed.

## Patentansprüche

1. Ausrichtungsvorrichtung für ein Fahrzeugdrehgestell, das mit bereiften Rädern ausgestattet ist, die sich auf zwei Abrollspuren stützen, die den Weg bilden, entlang dessen sich das Fahrzeug bewegt, wobei die Vorrichtung eine Richtungsrolle umfaßt, deren mittlere Ebene parallel oder im wesentlichen parallel zu der der Drehgestellräder ist und die sich um die eigene Achse drehen kann, wobei sie sich in eine Führungsschiene einpaßt, die zwischen den vorgenannten Spuren des Weges vor jeder Gabelung eingebaut ist, so daß die Rolle durch das Drehgestell über elastische Verbindungselemente getragen wird, die der Rolle gegenüber dem Drehgestell einen kleinen Rotationsfreiheitsgrad um eine Achse, die durch ihr Zentrum und senkrecht zur Wegebene verläuft, und einen gleichermaßen kleinen Translationsfreiheitsgrad in Richtung ihrer eigenen Achse verleihen, wobei allerdings die Rolle daran gehindert wird, sich gegenüber dem Drehgestell in der longitudinalen Richtung des Weges und der Richtung senkrecht zur Wegebene zu verschieben,
dadurch gekennzeichnet, daß die Verbindungselemente laminierte Blöcke (8a, 9a, 8b, 9b, 18v, 18r) umfassen, die aus Stapeln dünner Schichten abwechselnd aus festem Material und aus flexiblem Material bestehen, die untereinander verbunden sind.

2. Vorrichtung nach Anspruch 1, dadurch gekennzeichnet, daß die Verbindungselemente, die die beiden vorgenannten Freiheitsgrade ermöglichen, zwei laminierte gleichermaßen jeweils als laminierter Block oder Gruppe von laminierten Blöcken (8a, 8b; 9a, 9b) aufgebaute Einrichtungen umfassen, die entlang einem Kranz angeordnet sind, der auf der Achse durch das Zentrum (C) der Rolle (1) zentriert ist und senkrecht zur Wegebene steht, deren aufbauende Schichten plan und parallel zur Wegebene sind, wobei die beiden Einrichtungen auf beiden Seiten einer ersten Stützplatte (10) montiert sind, die sich parallel zur Wegebene erstreckt, zwischen zwei zweiten Stützplatten (6, 11), parallel zur ersten Platte (10) und sich gegenseitig unterstützend, wobei das zweite Plattenpaar (6, 11) gegenüber der Achse (A) der Rolle (1) oder dem Drehgestell (B) fixiert ist, während die erste Platte gegenüber letzterem oder der Rollenachse fixiert ist.

3. Vorrichtung nach Anspruch 2, dadurch gekennzeichnet, daß die beiden laminierten Einrichtungen unter Vorspannung zwischen den beiden zweiten Platten (6, 11) plaziert werden.

4. Vorrichtung nach Anspruch 2 oder 3, dadurch gekennzeichnet, daß die beiden laminierten Einrichtungen identisch sind und auf die gleiche Art um das Zentrum (C) der Rolle (1) herum angeordnet sind.

5. Vorrichtung nach Anspruch 4, dadurch gekennzeichnet, daß jede laminierte Einrichtung sich aus mehreren laminierten Blöcken (8a, 8b; 9a, 9b) in Form eines Kreisausschnittes zusammensetzt und daß wenigstens eine der ersten Platte (10) und der zweiten Platten (6, 11) in getrennte Abschnitte (10a, 10b; 11a, 11b) unterteilt ist, deren jede jeweils einen der genannten laminierten Blöcke berührt.

6. Vorrichtung nach Anspruch 5, dadurch gekennzeichnet, daß jede Einrichtung sich aus einem Paar identischer laminierter Blöcke (8a, 8b; 9a, 9b) zusammensetzt, deren einer symmetrisch gegenüber dem anderen bezüglich der mittleren Ebene (P) der Rolle (1) angeordnet ist, wobei die laminierten Blöcke jeder Einrichtung beiderseits der ersten Platte (10) zusammen mit denen der anderen Einrichtung angeordnet ist.

7. Vorrichtung nach einem der Ansprüche 1 bis 6, dadurch gekennzeichnet, daß die Verbindungselemente außerdem ein Paar von laminierten Blöcken (18r, 18v) umfassen, welche im wesentlichen zum Zentrum (C) der Rolle (1) entlang der longitudinalen Richtung (OX) des Weges ausgerichtet sind, und zwar in Form eines Kreisausschnittes mit kleinem Winkel beiderseits der mittleren Ebene (P) der Rolle (1), und zusammengesetzt sind aus zylindrischen Schichten, deren Achse senkrecht zur Wegebene steht und durch das Zentrum (C) der Rolle geht, wobei jeder der laminierten Blöcke zwischen zwei Stützen (19, 20) eingeschoben ist, wobei eine fix gegenüber der Achse der Rolle ist und die andere mit dem Drehgestell (B) zusammenhängt.

8. Vorrichtung nach Anspruch 7, dadurch gekennzeichnet, daß die beiden laminierten Blöcke (18v, 18r), die das besagte Paar bilden, symmetrisch gegenüber dem Zentrum (C) der Rolle (1) angeordnet sind.

9. Vorrichtung nach Anspruch 7 oder 8, dadurch gekennzeichnet, daß die beiden laminierten Blöcke (18v, 18r), die das besagte Paar bilden, unter Vorspannung zwischen ihren Stützen entlang der longitudinalen Richtung (OX) des Weges eingefügt sind.

10. Vorrichtung nach einem der Ansprüche 1 bis 9, dadurch gekennzeichnet, daß jeder der laminierten Blöcke, die sie enthält, durch Verbindung mit den Flächen der Platten oder Stützen verbunden ist, zwischen die er eingefügt ist.
